# EUROPÄISCHE PATENTANMELDUNG

(11) **EP 0 864 345 A1**
(43) Veröffentlichungstag der Anmeldung: **16.09.1998**
(21) Anmeldenummer: 98104430.8
(22) Anmeldetag: 12.03.1998
(51) Int. Cl.: B01D 45/08, B01D 45/10

(54) **Tropfenabscheider**

(30) Priorität: 12.03.1997 DE 19710053
(71) Anmelder: Munters Euroform, 52072 Aachen (DE)
(72) Erfinder: Wurz, Dieter, 76530 Baden-Baden (DE)
(74) Vertreter: Patentanwälte Hauck, Graalfs, Wehnert, Döring, Siemons

(57) **Zusammenfassung**

Es wird ein Tropfenabscheider mit einer Vielzahl von zu Paketen konfigurierten tropfenabscheidenden Elementen (6), die an einer Unterstützungskonstruktion (4) angeordnet sind, beschrieben. Die Pakete sind mit der Unterstützungskonstruktion hochklappbar verbunden. Hierdurch kann der Tropfenabscheider selbst bei engsten Raumverhältnissen in einfacher Weise inspiziert und manuell gereinigt werden.

## Beschreibung

Die vorliegende Erfindung betrifft einen Tropfenabscheider mit einer Vielzahl von zu Paketen konfigurierten tropfenabscheidenden Elementen, die an einer Unterstützungskonstruktion angeordnet sind.

Zur Entschwefelung von Rauchgasen werden Waschtürme eingesetzt. Um einen Austrag von Waschflüssigkeitstropfen mit dem gereinigten Rauchgas zu verhindern, sind zum Waschturmaustritt hin, gelegentlich auch in einem gesonderten Gehäuse stromab des Waschturmes, Tropfenabscheider eingebaut. Beispielsweise besitzt eine typische Konfiguration, bei der Rauchgas und Waschflüssigkeit im Gegenstrom geführt sind, einen zweistufigen Tropfenabscheider. Der Feststoffgehalt der vom Tropfenabscheider eingefangenen Tropfen bleibt zu einem gewissen Prozentsatz an der Abscheideroberfläche haften und kann dort zu einer die Funktion beeinträchtigenden Inkrustierung führen. Um dies zu vermeiden, werden Tropfenabscheider mit einem Sprühreinigungssystem ausgerüstet.

Anfangs wurden Waschtürme nur mit einer Tropfenabscheiderstufe ausgestattet. Doch bald mußte man erkennen, daß eine zweite Tropfenabscheiderstufe zur weitgehenden Vermeidung eines den Betrieb nachfolgender Komponenten, wie Gebläse oder Reingaserhitzer, störenden Tropfenaustrages erforderlich ist. Inzwischen zeigen die langjährigen Betriebserfahrungen, daß eine noch weitergehende Verringerung des Tropfenaustrages aus dem Waschturm wirtschaftlich sinnvoll ist. Hiermit sind Reparaturkosten an nachfolgenden Komponenten zu vermeiden, die ohne weiteres das Zehnfache der Nachrüstungskosten für eine dritte Tropfenabscheiderstufe erreichen können. Ferner wird auf diese Weise die Grobpartikelemission mit dem Rauchgas stark reduziert, da mit einem reduzierten Reingastropfengehalt auch ein geringerer Feststoffeintrag in den Reingastrakt verbunden ist. Die Emission häufig korrosiver Grobpartikel (d > 0,5 mm) mit dem Rauchgas hat mancherorts zu erheblichen Schadensersatzansprüchen geführt.

Bei Neuanlagen bereitet die Anordnung einer dritten Tropfenabscheiderlage keine grundsätzlichen Probleme und ist auch mit geringen Zusatzkosten ausführbar. Bei Altanlagen kann jedoch die Nachrüstung einer dritten Tropfenabscheiderlage mit unverhältnismäßig hohen Kosten verbunden sein. Häufig ist sie nur durch extreme Kompaktbauweise kostengünstig ausführbar. Andererseits besteht jedoch die Notwendigkeit, die Trofenabscheider von Zeit zu Zeit zu inspizieren. Aus diesem Grunde wurden in der Vergangenheit die Tropfenabscheider mit einem für die Begehung des Zwischenraumes ausreichenden Abstand eingebaut. In diesem Zwischenraum ist die Tropfenabscheider-Reinigungsbedüsung angeordnet.

Für die Nachrüstung einer dritten Tropfenabscheider-Lage ist jedoch häufig der verfügbare Raum so gering, daß das Prinzip der "Begehbarkeit des Zwischenraumes" aufgegeben werden muß oder sehr hohe Kosten für einen weitgehenden Umbau des Wäscherkopfes bzw. für die Nachrüstung eines gesonderten Tropfenabscheider-Gehäuses akzeptiert werden müssen.

Der vorliegenden Erfindung liegt die Aufgabe zugrunde, einen Tropfenabscheider der angegebenen Art zu schaffen, der kompakt baut und selbst bei engsten Raumverhältnissen in einfacher Weise inspizierbar und manuell reinigbar ist.

Diese Aufgabe wird erfindungsgemäß bei einem Tropfenabscheider der angegebenen Art dadurch gelöst, daß die Pakete mit der Unterstützungskonstruktion hochklappbar verbunden sind.

Mit der erfindungsgemäßen Lösung wird vermieden, die Tropfenabscheiderpakete der betreffenden Stufe auszubauen, zu inspizieren, gegebenenfalls zu reinigen und dann wieder zusammenzubauen. Damit wird ein erheblicher Personal- und Zeitaufwand eingespart und das Risiko einer Beschädigung der Tropfenabscheider vermieden. Erfindungsgemäß hingegen wird eine wartungsfreundliche Konfiguration zur Verfügung gestellt, die nicht die genannten Nachteile aufweist.

Bei der erfindungsgemäßen Lösung sind die Pakete aus den tropfenabscheidenden Elementen mit der Unterstützungskonstruktion hochklappbar verbunden. Sie besitzen somit eine im wesentlichen horizontale oder leicht geneigte Betriebsstellung und eine hochgeklappte Inspektions-, Wartungs- bzw. Reinigungsstellung. Die Tropfeßabscheiderpakete können somit ohne einen sonst notwendigen Ausbau inspiziert und nötigenfalls gereinigt werden.

In Weiterbildung der Erfindung sind die Pakete an hochklappbaren Trägern angeordnet. Bei diesen Trägern kann es sich beispielsweise um Rahmen oder Basisplatten handeln, an oder in denen die Tropfenabscheiderpakete angeordnet sind. Andere Ausgestaltungen von Trägern sind ebenfalls möglich. Die Anordnung von Trägern sichert eine einfache Handhabbarkeit für das Hochklappen und Herunterklappen.

Das Hochklappen und Herunterklappen der Tropfenabscheiderpakete bzw. hierfür vorgesehenen Träger kann manuell oder motorisch erfolgen. Im zweiten Falle sind geeignete Antriebseinrichtungen (Stellmotoren) vorgesehen, die die Pakete bzw. Träger bewegen. Derartige Antriebseinrichtungen sind dem Fachmann bekannt und müssen an dieser Stelle nicht im einzelnen erläutert werden.

Eine spezielle Ausführungsform der Erfindung zeichnet sich dadurch aus, daß die tropfenabscheidenden Elemente eines Paketes durch an das Tropfenabscheiderprofil angepaßte Ausnehmungen in der Basisplatte gesteckt und auf der Außenseite der Platte mit dieser verbunden sind.

Die Pakete und/oder deren Träger sind zweckmäßigerweise über Scharniere mit der Unterstützungskonstruktion verbunden. Hierdurch lassen sich die Pakete bzw. deren Träger einfach hoch- und herunterklappen.

In Weiterbildung der Erfindung sind die Pakete und/oder deren Träger an Konsolen gelagert bzw. abgestützt. Diese Konsolen sind zweckmäßigerweise so ausgebildet bzw. angeordnet, daß sie die Pakete und/oder deren Träger sowohl in der Betriebsstellung als auch in der hochgeklappten Stellung lagern bzw. abstützen. Mit anderen Worten, die Pakete bzw. deren Träger sind an einem Ende an der einen Konsole drehbar bzw. klappbar gelagert und stützen sich mit dem anderen Ende in der Betriebsstellung an der benachbarten Konsole ab. In der hochgeklappten Stellung stützen sie sich vorteilhafterweise an der einen Konsole, an der sie gelagert sind, ab.

Die Pakete und/oder deren Träger werden zweckmäßigerweise soweit hochgeklappt, daß sie in der hochgeklappten Stellung mit der Horizontalen einen Winkel von über 90° bilden, d.h. leicht rückwärts geneigt sind. Sie können somit besonders gut inspiziert und nötigenfalls gereinigt werden. In diesem hochgeklappten Zustand liegen sie, falls Konsolen vorgesehen sind, vorzugsweise an deren Außenseiten an. Ein geeigneter Neigungswinkel ist beispielsweise 110°.

Vorzugsweise sind die Pakete und/oder deren Träger auch in der Betriebsstellung zur Horizontalen geneigt. Ein bevorzugter Neigungswinkel liegt in einem Bereich von 10-60°. Diese geneigte Anordnung bietet den Vorteil, daß zwischen Unterstützungskonstruktion und den Tropfenabscheiderpaketen noch genügend Raum für den Einbau einer Tropfenabscheiderbedüsung vorhanden ist, und zwar sowohl für die anströmseitige Reinigung der Pakete als auch für die abströmseitige Reinigung einer vorgeschalteten Tropfenabscheiderstufe, falls eine solche vorhanden ist. Darüber hinaus bietet die zur Horizontalen geneigte Anordnung verfahrenstechnische Vorteile, da sie höhere Strömungsgeschwindigkeiten erlaubt und weniger verkrustungsanfällig ist.

Bei dieser Ausführungsform sind daher die Tropfenabscheiderpakete in der Form eines Sheddaches angeordnet.

Der erfindungsgemäß ausgebildete Tropfenabscheider besitzt eine geeignete Unterstützungskonstruktion, die die vorstehend erwähnten Konsolen einschließt oder an der die Konsolen angeordnet sind. Diese Unterstützungskonstruktion kann beispielsweise eine speziell für den Tropfenabscheider ausgebildete Träger- bzw. Lagerkonstruktion sein. Die Unterstützungskonstruktion kann jedoch auch von einer weiteren Tropfenabscheiderstufe gebildet sein. Im letztgenannten Fall umfaßt der Tropfenabscheider beispielsweise eine herkömmlich ausgebildete Tropfenabscheiderstufe, auf der der erfindungsgemäß ausgebildete Tropfenabscheider mit relativ geringem Abstand hierzu ausgebildet ist. Eine zusätzliche Unterstützungskonstruktion für den erfindungsgemäßen Tropfenabscheider kann hierbei im wesentlichen entfallen. Wie erwähnt, ergibt sich hierbei der Vorteil, daß der erfindungsgemäß ausgebildete Tropfenabscheider in einem relativ geringen Abstand von der bestehenden Tropfenabscheiderstufe angeordnet werden kann, so daß vorhandene enge Raumverhältnisse berücksichtigt werden können.

Der erfindungsgemäß ausgebildete Tropfenabscheider ist zweckmäßigerweise in Leichtbauweise erstellt. Dies ist insbesondere für den nachträglichen Einbau des Tropfenabscheiders von Vorteil, nicht zuletzt aus statischen Gründen.

Ein sehr wichtiger Aspekt mit großen Kostenvorteilen für die Nachrüstung eines Tropfenabscheiders besteht darin, den Tropfenabscheider mit seiner Unterstützungskonstruktion derart auszuführen, daß im Wäscher keine heißen Verbindungstechniken (Heißverschweißen) zum Einsatz kommen müssen. Der erfindungsgemäß ausgebildete Tropfenabscheider ist daher vorteilhafterweise über Kaltverbindungstechniken zusammenbaubar bzw. in bestehenden Wäscheranlagen montierbar. Somit kann der Einbau eines Brandschutzschottes für die Tropfenabscheidermontage unterbleiben. Hierdurch können die Nachrüstungskosten für eine Tropfenabscheiderlage beträchtlich gesenkt werden.

Die Erfindung wird nachfolgend anhand eines Ausführungsbeispiels in Verbindung mit der Zeichnung im einzelnen erläutert. Es zeigen:
- Figur 1: in schematischer Weise den Wäscherkopf eines Kraftwerkwaschturmes mit eingebautem Tropfenabscheider in seitlicher Ansicht;
- Figur 2: eine vergrößerte Darstellung eines Teils des Tropferabscheiders der Figur 1; und
- Figur 3: das in dem gestrichelten Kreis der Figur 2 vorhandene Detail.

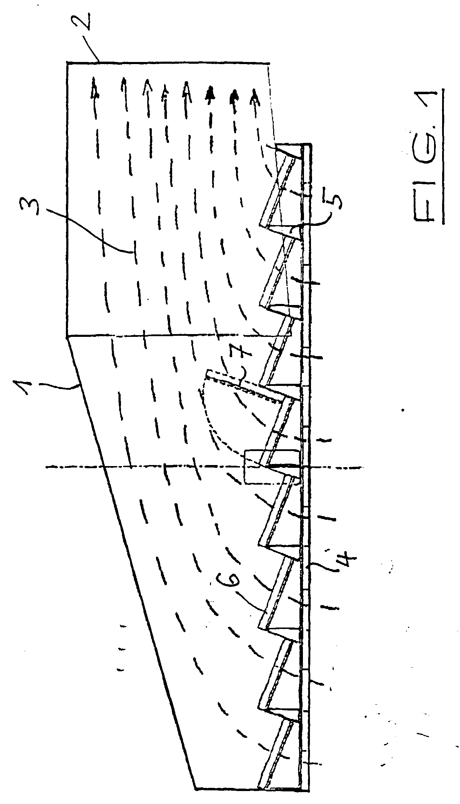

Der in Figur 1 dargestellte Wäscherkopf eines Kraftwerkwaschturmes zum Entschwefeln besitzt einen Rauchgaskanal, in dem das zu waschende Rauchgas von unten nach oben und dann in der Figur nach rechts in einen Reingaskanal 2 strömt. Die Strömungsrichtung des Rauchgases ist bei 3 angedeutet. Auf seinem Weg passiert das Rauchgas diverse Sprühebenen (nicht gezeigt) sowie mehrere Tropfenabscheiderlagen, von denen eine dritte Lage dargestellt ist. Während die unteren beiden Tropfenabscheiderlagen in herkömmlicher Weise stationär ausgebildet sind, ist die dritte Lage neuerungsgemäß ausgebildet und besitzt Tropfenabscheiderpakete, die mit der zugehörigen Unterstützungskonstruktion hochklappbar verbunden sind. Die entsprechende Unterstützungskonstruktion ist bei 4 dargestellt. Es kann sich hierbei um eine gesonderte Unterstützungskonstruktion aber auch um die darunter befindliche Tropfenabscheiderlage handeln.

Wie man Figur 1 entnehmen kann, sind in Abständen auf der Unterstützungskonstruktion 4 Konsolen 5 angeordnet, die im Schnitt etwa dreieckförmig ausgebildet sind. An diesen Konsolen sind Tropfenabscheiderpakete 6 hochklappbar gelagert. Bei 7 ist ein Tropfenabscheiderpaket im hochgeklappten Zustand dargestellt. Man erkennt, daß in der Betriebsstellung die Tropfenabscheiderpakete 6 eine zur Horizontalen geneigte Stellung einnehmen. In dieser Stellung stützen sie sich jeweils am oberen Ende einer Konsole ab. Im aufgeklappten Zustand, wie bei 7 gezeigt, liegen sie an der Schrägseite der Konsole an und werden hierdurch ebenfalls abgestützt.

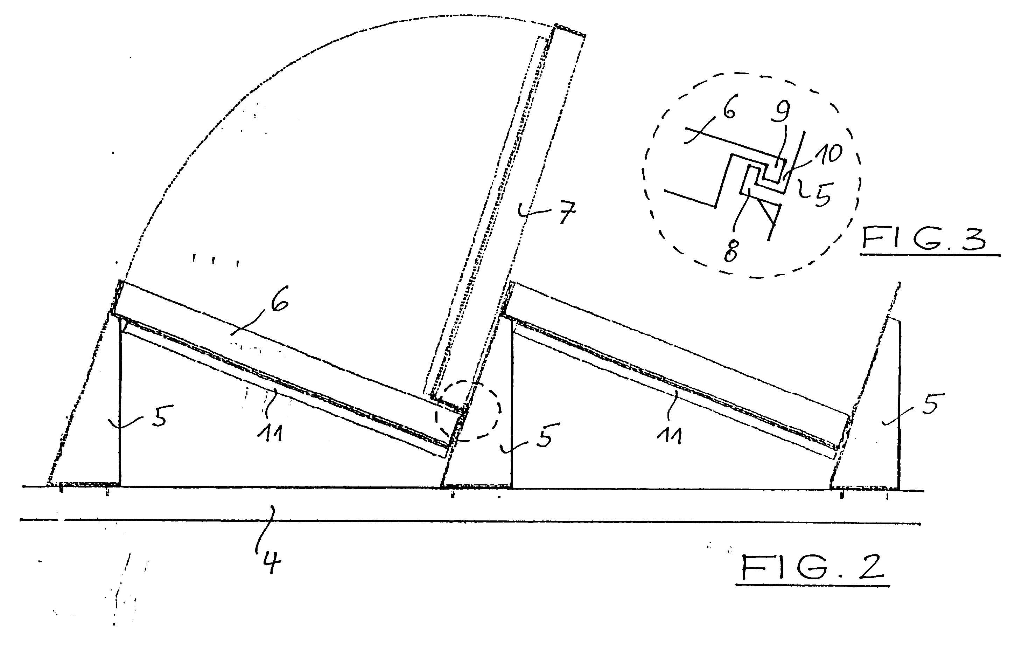

Die Figuren 2 und 3 zeigen den genauen Aufbau des Tropfenabscheiders im einzelnen. Wie Figur 3 zeigt, sind an den Schrägseiten der Konsolen 5 vorspringende Leisten 8 angeordnet, die zusammen mit den vorspringenden Leisten 9 der Tropfenabscheiderpakete 6 ein Scharnier bilden. Die Leisten 9 greifen hierbei in eine Pfanne 10 ein und können somit manuell in einfacher Weise in die bei 7 gezeigte Stellung hochgeklappt werden. In dieser Stellung stützen sich die Pakete an den Schrägseiten der Konsolen ab.

Zwischen der Unterstützungskonstruktion 4 und den Tropferabscheiderpaketen 6 können entsprechende Bedüsungseinrichtungen angeordnet werden.

Die hier gezeigte Konstruktion ist eine Leichtbaukonstruktion aus Kunststoff. Die Verbindungen zwischen den einzelnen Teilen sind mit Schrauben ausgeführt.

Bei diesem Ausführungsbeispiel sind die Tropfenabscheiderpakete 6 direkt mit einer Grundplatte 11 verbunden, zum Beispiel durch Verkleben oder Schweißen. An dieser Grundplatte ist auch die Abstützleiste 9 angeordnet, mit der sich das Tropfenabscheiderpaket in der Pfanne 10 abstützt. Die Grundplatte ist mit Aussparungen entsprechend dem Tropfenabscheiderprofil versehen. Die einzelnen Lamellen werden durch die Aussparungen gesteckt und auf der Außenseite verschweißt, bevor die Pakete in den Waschturm eingebracht werden.

Bei einer Alternative der Erfindung sind die Pakete und/oder deren Träger gegen eine Öffnungen aufweisende Stützkonstruktion gelehnt, deren Öffnungen durch abnehmbare oder schwenkbare Platten verschlossen sind. Die Stützkonstruktion ist vorzugsweise geneigt ausgebildet.

## Patentansprüche

1. Tropfenabscheider mit einer Vielzahl von zu Paketen konfigurierten tropfenabscheidenden Elementen, die an einer Unterstützungskonstruktion angeordnet sind, dadurch gekennzeichnet, daß die Pakete (6) mit der Unterstützungskonstruktion (4) hochklappbar verbunden sind.

2. Tropfenabscheider nach Anspruch 1, dadurch gekennzeichnet, daß die Pakete (6) an hochklappbaren Trägern angeordnet sind.

3. Tropfenabscheider nach Anspruch 2, dadurch gekennzeichnet, daß die Träger von Rahmen oder Basisplatten (11) gebildet sind.

4. Tropfenabscheider nach Anspruch 3, dadurch gekennzeichnet, daß die tropfenabscheidenden Elemente eines Paketes (6) durch an das Tropfenabscheiderprofil angepaßte Ausnehmungen in der Basisplatte (11) gesteckt und auf der Außenseite der Platte mit dieser verbunden sind.

5. Tropfenabscheider nach einem der vorangehenden Ansprüche, dadurch gekennzeichnet, daß die Pakete (6) und/oder deren Träger über Scharniere (8, 9, 10) mit der Unterstützungskonstruktion (4) verbunden sind.

6. Tropfenabscheider nach einem der vorangehenden Ansprüche, dadurch gekennzeichnet, daß die Pakete (6) und/oder deren Träger an Konsolen (5) gelagert bzw. abgestützt sind.

7. Tropfenabscheider nach Anspruch 6, dadurch gekennzeichnet, daß die Konsolen (5) die Pakete (6) und/oder deren Träger sowohl in der Betriebsstellung als auch in der hochgeklappten Stellung lagern bzw. abstützen.

8. Tropfenabscheider nach einem der vorangehenden Ansprüche, dadurch gekennzeichnet, daß die Pakete (6) und/oder deren Träger in der hochgeklappten Stellung mit der Horizontalen einen Winkel von über 90° bilden.

9. Tropfenabscheider nach einem der vorangehenden Ansprüche, dadurch gekennzeichnet, daß die Pakete (6) und/oder deren Träger in der Betriebsstellung zur Horizontalen geneigt sind.

10. Tropfenabscheider nach einem der vorangehenden Ansprüche, dadurch gekennzeichnet, daß die Pakete (6) und/oder deren Träger im Abstand von der Unterstützungskonstruktion (4) gelagert sind und daß zwischen ihnen und der Unterstützungskonstruktion eine Sprüheinrichtung angeordnet ist.

11. Tropfenabscheider nach einem der vorangehenden Ansprüche mit einer Tropfenabscheiderstufe mit stationär angeordneten tropfenabscheidenden Elementen, dadurch gekennzeichnet, daß die hochklappbaren Pakete (6) und/oder deren Träger mit geringem Abstand von der Tropfenabscheiderstufe mit den stationär angeordneten tropfenabscheidenden Elementen angeordnet sind.

12. Tropfenabscheider nach einem der vorangehenden Ansprüche, dadurch gekennzeichnet, daß die Unterstützungskonstruktion (4) von einer weiteren Tropfenabscheiderstufe gebildet ist.

13. Tropfenabscheider nach einem der vorangehenden Ansprüche, dadurch gekennzeichnet, daß er in Leichtbauweise erstellt ist.

14. Tropfenabscheider nach einem der vorangehenden Ansprüche, dadurch gekennzeichnet, daß er über Kaltverbindungstechniken zusammenbaubar bzw. in bestehenden Wäscheranlagen montierbar ist.

15. Tropfenabscheider nach einem der vorangehenden Ansprüche, dadurch gekennzeichnet, daß die Pakete und/oder deren Träger gegen eine Öffnungen aufweisende Stützkonstruktion gelehnt sind, deren Öffnungen durch abnehmbare oder schwenkbare Platten verschlossen sind.
